# EUROPÄISCHE PATENTSCHRIFT

(11) **EP 4 277 505 B1**
(45) Veröffentlichungstag und Bekanntmachung des Hinweises auf die Patenterteilung: **16.04.2025**
(21) Anmeldenummer: 22700626.9
(22) Anmeldetag: 13.01.2022
(51) Int. Cl.: A47J 36/06, A47J 36/24, A47J 47/02, A47J 36/10

(54) **BEHÄLTER ZUM AUFNEHMEN, AUFBEWAHREN UND AUSGEBEN VON SPEISEN**
CONTAINER FOR RECEIVING, STORING, AND DISPENSING MEALS
CONTENANT DESTINÉ À RECEVOIR, CONSERVER ET DISTRIBUER DES ALIMENTS

(30) Priorität: 13.01.2021 DE 102021200271
(43) Veröffentlichungstag der Anmeldung: 22.11.2023
(73) Patentinhaber: WMF GmbH, 73312 Geislingen/Steige (DE)
(72) Erfinder: REINHARDT, Kevin, 79183 Waldkirch (DE); MAIER, Julian, 75177 Pforzheim (DE)
(74) Vertreter: Pfenning, Meinig & Partner mbB
(86) Internationale Anmeldenummer: PCT/EP2022/050641
(87) Internationale Veröffentlichungsnummer: WO 2022/152790

(56) Entgegenhaltungen:
- CN-A- 112 144 997
- DE-T2- 69 608 858
- US-A1- 2003 218 000
- US-A1- 2005 279 225
- US-A1- 2008 010 778

## Beschreibung

Die Erfindung bezieht sich auf einen Behälter zum Aufnehmen, Warmhalten und/oder Ausgeben von Speisen, wobei der Behälter einen mittels eines Deckels verschließbaren Grundkörpers aufweist. Gemäß einem Aspekt wird eine Bremse bereitgestellt, welche eine Schließbewegung des Deckels abbremst. Gemäß einem weiteren Aspekt wird ein Verbindungsmodul zum Verbinden des Deckels mit dem Grundkörper bereitgestellt, wobei das Verbindungsmodul sowohl mit dem Deckel und als auch mit dem Grundkörper lösbar verbunden ist.

Behälter zum Aufnehmen, Aufbewahren und Ausgeben von Speisen werden beispielsweise auf Büffets verwendet, um Speisen in einem Wasserbad warmzuhalten. Typischerweise umfassen die Behälter einen wannenförmigen Grundkörper, welcher durch einen Deckel verschließbar ist. Die Behälter sind in mannigfaltigen Ausführungsformen bekannt, beispielsweise mit ebenen oder gewölbten Deckeln, die je nach Bedarf geöffnet bzw. geschlossen werden können, um die in dem Behälter aufbewahrten Lebensmittel möglichst lang frisch und ansprechend aufzubewahren und gegebenenfalls präsentieren zu können. Diese Behälter sind unter anderem in der Gastronomie auch unter dem Begriff "Chafing Dish" bekannt.

Ein Problem bei diesen Vorrichtungen kann die Handhabung des Deckels sein. Abnehmbare Deckel, welche zum Verschließen lediglich auf den Grundkörper gelegt werden, und nicht mit diesem gelenkig verbunden sind, erfordern einen zusätzlich freizuhaltenden Abstellplatz. Um horizontale Achsen verschwenkbare mit dem Grundkörper gelenkig verbundene Deckel sollten wiederum vollständig nach hinten verschwenkbar sein, um z.B. ein Wasserbadgefäß entnehmen zu können. Dabei besteht die Gefahr, dass die relativ schweren Deckel der Bedienperson unkontrolliert aus der Hand gleiten und nach hinten unten umschlagen, wodurch das Gefäß auf dem Tisch bewegt, das Warmhaltewasser überschwappen und Speisen verschüttet werden könnten. Beim Schließen des Deckels muss die Bedienperson tief nach hinten unten greifen, um den Deckel zu fassen. Es besteht also ein Bedarf, den Schließmechanismus des Deckels weiterzuentwickeln.

DE 696 08 858 T2 offenbart Scharniere von Gehäusedeckeln von Kochgeräten, wie beispielsweise Fritteusen.

US 2005/279225 A1 offenbart eine Induktionsheizungspfanne, die eine innere Pfanne, eine äußere Pfanne, einen Deckel und ein Scharnierelement umfasst.

CN 112 144 997 A offenbart eine Scharnieranordnung und ein Kochgerät mit dieser Scharnieranordnung.

US 2008/010778 A1 offenbart ein Scharnier für den Deckel eines Serviergefäßes.

Manchmal ist es wünschenswert, wenn der gelenkig mit dem Grundkörper verbundene Deckel vollständig von dem Grundkörper abmontiert werden kann. Es kann zum Beispiel erwünscht sein, den Deckel getrennt von dem Grundkörper in einer Geschirrspülmaschine zu reinigen. Manche vorbekannte Deckel können zwar abgenommen werden, enthalten aber mechanische Komponenten, welche für den Einsatz in Geschirrspülmaschinen nicht oder nur bedingt geeignet sind. Andere Deckel können nur mit einem dazu vorgesehenen Werkzeug vom Grundkörper abgenommen werden. Es wäre vorteilhaft, wenn eine praxistaugliche Lösung für einen abnehmbaren Deckel gefunden wird.

Aufgabe der Erfindung ist es, einen Behälter zum Aufnehmen, Warmhalten und/oder Ausgeben von Speisen zu konzipieren, der die zuvor beschriebenen Probleme zumindest teilweise zu lösen vermag.

Diese Aufgabe wird durch einen Behälter mit den Merkmalen des Hauptanspruchs gelöst. Weiterbildungen der Erfindung sind durch die Gegenstände der Unteransprüche und der nachfolgenden Beschreibung definiert.

Gemäß einem nicht erfindungsgemäßen ersten Aspekt wird ein Behälter, insbesondere zum Aufnehmen, Warmhalten und/oder Ausgeben von Speisen, bereitgestellt. Der Behälter umfasst:
- einen Grundkörper,
- einen zwischen einer Schließstellung und einer Öffnungsstellung mittels eines Drehgelenks schwenkbaren Deckel zum Verschließen des Grundkörpers und
- mindestens eine Bremse zum Abbremsen einer Schwenkbewegung des Deckels und/oder zum Halten des Deckels in einer Position zwischen der Schließstellung und der Öffnungsstellung.

Die Bremse weist einen Freilauf auf und ist derart ausgestaltet, dass sie eine Schwenkbewegung des Deckels in Schließrichtung abbremst, während sie eine Schwenkbewegung des Deckels in Öffnungsrichtung nicht abbremst.

Der Freilauf definiert typischerweise eine Sperrrichtung und eine Freilaufrichtung. Vorzugsweise entspricht die Sperrrichtung der Schließrichtung des Deckels und/oder wobei die Freilaufrichtung der Öffnungsrichtung des Deckels entspricht. Mit anderen Worten ist der Freilauf derart mit einer Schwenkbewegung des Deckels gekoppelt, dass die Bremse den Deckel in Schließrichtung bremst oder hält, nicht jedoch in Öffnungsrichtung.

Die Bremse kann insbesondere ausgestaltet sein, den Deckel in einer Vielzahl von Positionen, vorzugsweise stufenlos, zwischen der Schließstellung und der Öffnungsstellung zu halten. Die Öffnungsstellung bezeichnet hierbei die Stellung, in der der Deckel maximal weit geöffnet ist und somit einen maximalen Öffnungswinkel aufweist. Der maximale Öffnungswinkel kann durch mindestens einen Anschlag festgelegt sein. In diesem Fall wird die Schwenkbewegung des Deckels also durch den Anschlag begrenzt. In der Schließstellung deckt der Deckel den Grundkörper komplett ab. Durch die Bremse wird somit typischerweise erreicht, dass der Deckel in praktisch beliebigen Stellungen zwischen der Schließstellung und der Öffnungsstellung stehenbleibt. Der Benutzer hat somit nur den Deckel in eine Stellung zu bewegen, in der die Speisen zugänglich sind, wobei der Deckel nach dem Loslassen selbsttätig durch die Bremskraft der Bremse in dieser Stellung verbleibt. Dies bedeutet auch, dass für das Schließen des Deckels eine leichte Handkraft zur Überwindung der Bremskraft der Bremse erforderlich ist. Diese erforderliche Handkraft ist üblicherweise in einem geöffneten vertikalen Zustand des Deckels, zum Beispiel bei etwa 90°, am größten und nimmt durch den sich vergrößernden Hebelarm beim Schließen stetig ab. Typischerweise ist beim bestimmungsgemäßen Gebrauch des Behälters der Deckel in der Schließstellung im Wesentlichen horizontal ausgerichtet, d.h. senkrecht zur Schwerkraft.

Optional ist die Bremse eine mechanische Reibbremse. Mit anderen Worten wird die Bremskraft durch Reibung zwischen einem festen Körper und einem bewegten Körper erzeugt. Derartige Bremsen sind typischerweise robust und durch einen vergleichsweisen einfachen Aufbau gekennzeichnet. In einer Ausführungsform weist die Bremse mindestens einen Bremsbelag und eine Bremsscheibe auf. Es kann vorgesehen sein, dass die Bremsscheibe ruhend in Bezug auf den Grundkörper angeordnet ist. Der Bremsbelag kann sich bei einer Bewegung des Deckels relativ zum Grundkörper bewegen. Alternativ ist der Bremsbelag ruhend in Bezug auf den Grundkörper angeordnet. In diesem Fall bewegt sich die Bremsscheibe bei einer Bewegung des Deckels relativ zum Grundkörper.

In manchen Ausführungsformen weist das Drehgelenk eine drehbare, mit dem Freilauf gekoppelte und mit dem Deckel verbundene Welle auf. Die Welle dreht in der Regel synchron mit einer Schwenkbewegung des Deckels, d.h. beide Elemente werden beim Schwenken des Deckels um den gleichen Drehwinkel gedreht. Optional ist die Bremse derart ausgestaltet, dass der Bremsbelag und die Bremsscheibe in Freilaufrichtung der Welle relativ zueinander ruhen und eine Relativbewegung des Bremsbelags und der Bremsscheibe in Sperrrichtung der Welle abgebremst wird. Weiterhin kann ein Federelement vorgesehen sein, wobei das Federelement ausgestaltet ist, den Bremsbelag und die Bremsscheibe in axialer Richtung zusammenzudrücken.

Die Welle kann von einer Lagerbuchse umgriffen werden. Die Welle kann in einem durch die Lagerbuchse definierten Innenraum angeordnet bzw. gelagert sein. Die Lagerbuchse kann mit mindestens einer Abdeckung verbunden sein, welche den durch die Lagerbuchse definierten Innenraum zumindest bereichsweise verschließt. Der Bremsbelag kann beispielsweise drehfest mit der Lagerbuchse verbunden sein, z.B. durch Formschluss.

Der Freilauf kann zum Beispiel auf der Welle montiert sein. Oftmals ist der Freilauf als Hülsenfreilauf ausgestaltet. Optional ist der Freilauf radial zwischen der Lagerbuchse und der Welle angeordnet. In einer Ausführungsform ist radial zwischen der Lagerbuchse und der Welle mindestens ein Wälzlager angeordnet, beispielsweise zwei Wälzlager oder nach Bedarf sogar mehr als zwei. Es kann alternativ oder zusätzlich auch vorgesehen sein, dass mindestens ein Wälzlager in dem Freilauf integriert ist. Es kann mindestens ein Dichtelement vorgesehen sein, welches ausgestaltet ist, den Freilauf und/oder das mindestens eine Wälzlager gegen Wasser und Feuchtigkeit abzudichten. Die Bremse kann außerdem in einem Gehäuse angeordnet sein, wobei das Gehäuse manchmal zwei Teilgehäuse aufweisen kann. Zum Beispiel kann die Bremse in oder an einem Verbindungsmodul angeordnet sein, welches den Deckel mit dem Grundkörper verbindet. Für das Verbindungsmodul eignet sich insbesondere das weiter unten beschriebene Verbindungsmodul.

Die Bremsscheibe kann die Welle, den Freilauf und/oder die Lagerbuchse in radialer Richtung umgreifen. Optional ist radial zwischen der Lagerbuchse und der Bremsscheibe ein Gleitlager angeordnet, welches eine Drehung, vorzugsweise eine reibungsarme Drehung, der Lagerbuchse relativ zur Bremsscheibe ermöglicht.

Insgesamt kann mit der Bremse der zuvor beschriebenen Art eine geräuscharme Bremsfunktion bei einer hohen Lebensdauer erzielt werden. Weiterhin wird durch die beschriebene Bremse eine stufenlose Deckelpositionierung ermöglicht. Die Bremse zeichnet sich weiter durch eine geringe Anzahl an Komponenten und eine einfache Montage aus.

Erfindungsgemäß wird ein Behälter zum Aufnehmen, Warmhalten und/oder Ausgeben von Speisen, vorgeschlagen. Der Behälter umfasst
- einen Grundkörper,
- einen zwischen einer Schließstellung und einer Öffnungsstellung schwenkbaren Deckel zum Verschließen des Grundkörpers und
- ein Verbindungsmodul zum Verbinden des Deckels mit dem Grundkörper.

Das Verbindungsmodul weist ein erstes Verbindungselement auf, welches lösbar mit dem Deckel verbunden ist. Weiter weist das Verbindungsmodul ein zweites Verbindungselement auf, welches lösbar mit dem Grundkörper verbunden ist. Das Verbindungsmodul weist außerdem mindestens eine Komponente zum Beeinflussen einer Schwenkbewegung des Deckels auf.

Der Begriff "Iösbare Verbindung" soll hierbei insbesondere bedeuten, dass die Verbindung zerstörungsfrei und ohne Werkzeug gelöst werden kann. Mit dem Verbindungsmodul wird somit eine modulare Ankopplung des Deckels an den Grundkörper ermöglicht. Insbesondere kann das Verbindungsmodul sowohl vom Grundkörper als auch vom Deckel abmontiert werden. Durch die Modularität der Ankopplung können der Grundkörper, der Deckel und das Verbindungsmodul einzeln ausgetauscht, repariert und/oder gereinigt werden. Beispielsweise können der Grundkörper und der Deckel separat von dem Verbindungsmodul gereinigt werden. Dies kann insbesondere dann sinnvoll sein, wenn das Verbindungsmodul oder dessen Bauteile, wie die genannte Komponente zum Beeinflussen der Schwenkbewegung des Deckels, empfindlich für Wasser, Feuchtigkeit und/oder Reinigungsmittel sind.

Die genannte Komponente kann eine Bremse zum Abbremsen einer Schwenkbewegung des Deckels und/oder zum Halten des Deckels in einer Position zwischen der Schließstellung und der Öffnungsstellung aufweisen oder sein. Die Bremse kann hierbei wie die in Bezug auf den ersten Aspekt genannte Bremse ausgestaltet sein. Alternativ oder zusätzlich kann die genannte Komponente ein Motorelement zum Bewegen des Deckels zwischen der Schließstellung und der Öffnungsstellung umfassen oder sein. Das Verbindungsmodul kann ein Gehäuse umfassen, in dem die Komponente angeordnet ist.

In einer ersten Variante der Erfindung weist das erste Verbindungselement ein erstes Formschlusselement auf, welches zur Bildung eines ersten Formschlusses mit einem ersten am Deckel befestigten Gegenstück verbindbar ist. Zum Beispiel ist das erste Formschlusselement als Vorsprung ausgestaltet, während das erste Gegenstück eine komplementär geformte erste Aufnahme komplementär aufweist.

In dieser Variante ist ein erstes federndes Druckstück vorgesehen, welches bei Vorliegen des ersten Formschlusses in eine erste Arretierungsvertiefung einrastet. Das erste federnde Druckstück kann dazu beitragen, dass der erste Formschluss fixiert wird. Das erste federnde Druckstück ist zum Beispiel im ersten Formschlusselement verbaut. Außerdem kann die erste Arretierungsvertiefung in dem ersten Gegenstück ausgebildet sein. Üblicherweise ist die erste Arretierungsvertiefung in einer Innenwandung des Gegenstücks ausgebildet. Alternativ kann das erste federnde Druckstück auch im Gegenstück verbaut sein. In diesem Fall ist die erste Arretierungsvertiefung in dem ersten Formschlusselement ausgebildet.

Vorzugsweise kann die erste Verbindung ab einem Öffnungswinkel des Deckels von mindestens 45° gelöst werden, ohne dass der Grundkörper händisch festgehalten werden muss. Eine Federkraft bzw. Haltekraft des ersten federnden Druckstücks und/oder die Geometrie der ersten formschlüssigen Verbindung können derart ausgelegt sein, dass die zum Lösen der ersten Verbindung erforderliche Handkraft in der Regel bei einem Öffnungswinkel des Deckels zwischen 80° und 100°, vorzugsweise zwischen 85° und 95°, insbesondere etwa 90°, am kleinsten ist. Zum Beispiel erstrecken sich eine Längsachse (oder Längsrichtung) des ersten Formschusselements und eine Längsachse (oder Längsrichtung) des ersten Gegenstücks bei einem bestimmten Öffnungswinkel, insbesondere 90°, des Deckels parallel zur Schwerkraft, sodass die formschlüssige Verbindung des Deckels mit dem ersten Verbindungselement in der Öffnungsstellung durch Anheben des Deckels gelöst werden kann.

In einer zweiten Variante der Erfindung umfasst das zweite Verbindungselement ein zweites Formschlusselement, welches zur Bildung eines zweiten Formschlusses mit einem zweiten am Grundkörper befestigten Gegenstück verbindbar ist. Es ist ein zweites federndes Druckstück vorgesehen, welches bei Vorliegen des zweiten Formschlusses in eine zweite Arretierungsvertiefung einrastet. Das zweite federnde Druckstück kann dazu beitragen, dass der zweite Formschluss fixiert wird.

Das zweite federnde Druckstück ist zum Beispiel im zweiten Formschlusselement verbaut. Außerdem kann die zweite Arretierungsvertiefung in dem zweiten Gegenstück ausgebildet sein. Üblicherweise ist die zweite Arretierungsvertiefung in einer Innenwandung des zweiten Gegenstücks ausgebildet. Alternativ kann das zweite federnde Druckstück auch im zweiten Gegenstück verbaut sein. In diesem Fall ist die zweite Arretierungsvertiefung in dem zweiten Formschlusselement ausgebildet.

In manchen Ausführungsformen greift das zweite Formschlusselement in eine im Gegenstück ausgebildete zweite Aufnahme ein. Zum Beispiel ist das zweite Formschlusselement als Bolzen ausgestaltet, während die zweite Aufnahme komplementär geformt ist. Üblicherweise ist die zweite Arretierungsvertiefung in einer Innenwandung der zweiten Aufnahme ausgebildet ist. Weiter kann das zweite federnde Druckstück im zweiten Formschlusselement verbaut sein. Eine Längsachse des zweiten federnden Druckstücks kann sich insbesondere winklig, vorzugsweise senkrecht, zu einer Längsachse des zweiten Formschlusselements erstrecken. Die zweite Arretierungsvertiefung kann als Durchgangsöffnung ausgestaltet sein, sodass das zweite federnde Druckstück von außen, vorzugsweise per Fingerdruck, gelöst werden kann.

Zum Lösen des zweiten Formschlusses kann ein drittes federndes Druckstück vorgesehen sein, welches im eingerasteten Zustand des zweiten federnden Druckstücks vorgespannt ist. Das dritte federnde Druckstück kann ausgestaltet sein, beim Lösen des zweiten Druckstücks aus der zweiten Arretierungsvertiefung das zweite Formschlusselement zumindest teilweise aus der Aufnahme zu drücken. Eine Längsachse des dritten federnden Druckstücks kann parallel zur Längsachse des zweiten Formschlusselements und/oder senkrecht zur Längsachse des zweiten federnden Druckstücks ausgerichtet sein.

In manchen Ausführungsformen ist das dritte federnde Druckstück im zweiten Formschlusselement verbaut. Das dritte federnde Druckstück kann im eingerasteten Zustand des zweiten federnden Druckstücks an der Innenwandung der Aufnahme anliegen. Optional kann eine dritte Vertiefung in der Innenwandung der Aufnahme ausgebildet sein, in welche das dritte Druckstück eingreift.

Mindestens eines der oben genannten federnden Druckstücke kann eine Hülse und eine in der Hülse angeordnete Federelement sowie ein teilweise in der Hülse angeordnetes und teilweise aus der Hülse herausragendes Druckstück, wie eine Kugel oder einen Stift aufweisen. Das Federelement ist ausgebildet, eine Federkraft auf das Druckstück auszuüben, wodurch das Druckstück vorgespannt wird.

Typischerweise sind das erste Verbindungselement und das zweite Verbindungselement über ein Mittelstück miteinander verbunden, wobei die Komponente zum Beeinflussen einer Schwenkbewegung des Deckels optional an dem Mittelstück befestigt ist oder in dem Mittelstück verbaut ist.

Der Behälter kann manchmal zwei Verbindungsmodule der beschriebenen Art aufweisen. Es kann vorgesehen sein, dass die Längsrichtungen der ersten Formschlusselemente sich parallel zueinander erstrecken und in dieselbe Richtung zeigen. Die ersten Formschlüsse können also gleichzeitig durch Ziehen an dem Deckel gelöst werden. Es kann außerdem vorgesehen sein, dass die Längsrichtungen der zweiten Formschlusselemente parallel zueinander verlaufen, jedoch entgegengesetzt gerichtet sind (antiparallel). Dies hat zur Folge, dass die zweiten Formschlüsse nicht gelöst werden können, solange der Deckel noch an den Verbindungsmodulen befestigt ist. Stattdessen können die zweiten Formschlüsse (also die Anbindung der Verbindungsmodule an den Grundkörper) erst dann gelöst werden, wenn der Deckel von dem Verbindungsmodul abmontiert ist. Hierdurch kann die Wahrscheinlichkeit verringert werden, dass der Deckel zusammen mit den Verbindungsmodulen gereinigt wird.

Oftmals ist der Grundkörper wannenförmig ausgestaltet. Der Grundkörper umfasst in der Regel eine Bodenfläche, eine Vorderwand, eine Rückwand und zwei Seitenwände, wobei das Verbindungsmodul vorzugsweise an der Rückwand des Grundkörpers, insbesondere an einer oberen Seite der Rückwand befestigt ist. Die Rückwand kann sich in seitlicher Richtung von einem ersten Endabschnitt bis zu einem zweiten Endabschnitt erstrecken, wobei die Endabschnitte jeweils mit einer Seitenwand verbunden sind. Die Verbindungsmodule sind vorzugsweise in den Endabschnitten der Rückwand befestigt. Grund für diese nach außen verlegte Anbindung der Verbindungsmodule ist die Nutzung der Biegesteifigkeit der Seitenwände und/oder der Eckradien. Dadurch kann eine Rückwandverbiegung während des Öffnens oder Schließens des Deckels verhindert oder verringert werden. Hierdurch können wiederum auf zusätzliche Rückwandversteifungsplatten verzichtet werden. Die Bodenfläche, die Vorderwand, die Rückwand, die Seitenwände und/oder der Grundkörper können somit einstückig ausgebildet sein. Neben verringerten Herstellungskosten kann dies für eine ansprechende Optik und/oder einen verringerten Reinigungsaufwand sorgen. Manchmal ist an dem Grundkörper mindestens ein Lagerbock zum Verbinden mit dem zweiten Verbindungselement vorgesehen.

Die Anbindung des Verbindungsmoduls an den Grundkörper kann so konzipiert sein, dass das Verbindungsmodul leicht und ohne Werkzeug abnehmbar und damit austauschbar ist. Neben der Abnehmbarkeit und der damit verbundenen Handhabungs- und Wartungsfreundlichkeit kann auch die Möglichkeit geschaffen werden, zu einem späteren Zeitpunkt die Komponente zum Beeinflussen einer Schwenkbewegung des Deckels durch eine weitere Komponente zu tauschen oder upgraden, ohne eine Neukonstruktion des Grundkörpers und/oder des Deckels vornehmen zu müssen.

Somit können durch die Modularität auch verschiedene Versionen des Verbindungsmoduls bereitgestellt werden (z.B. mit Motorelement / ohne Motorelement und/oder mit Bremse / ohne Bremse), welche untereinander austauschbar sind. Insofern kann mit der Erfindung auch ein System bereitgestellt werden, welches den Grundkörper, den Deckel und mindestens zwei Verbindungsmodule aufweist, wobei die Verbindungsmodule vorzugsweise jeweils eine unterschiedliche Komponente zum Beeinflussen der Schwenkbewegung des Deckels aufweisen.

Einzelne Merkmale des Behälters gemäß dem ersten Aspekt können mit Merkmalen des Behälters gemäß dem zweiten Aspekt kombiniert werden und andersherum. In einer bevorzugten Ausführungsform weisen der Behälter gemäß dem ersten Aspekt und der Behälter gemäß dem zweiten Aspekt die gleichen Merkmale auf.

In weiteren Ausgestaltungsformen kann der Behälter gemäß einem der oben beschriebenen Aspekte Teil eines Systems mit zusätzlichen Komponenten sein. So kann zusätzlich ein Wasserbadgefäß vorgesehen sein, welches durch den Grundkörper aufgenommen wird. Ein zwischen dem Grundkörper und dem Wasserbadgefäß ausgebildeter Zwischenraum kann mit Wasser ausgefüllt werden. Eine Heizvorrichtung kann vorgesehen sein, um das Wasser zu erhitzen und/oder warm zu halten. Der Behälter kann beispielsweise auf einem Gestell mit einer darunterliegenden Heizvorrichtung angeordnet werden, wobei als Heizvorrichtung z.B. Brennstoffdosen oder elektrische Heizelemente verwendet werden können.

Die Erfindung wird anhand beigefügter Figuren näher erläutert. In den Figuren zeigen:
- Fign. 1-5: schematisch verschiedene Ansichten eines Behälters zum Aufnehmen, Warmhalten und/oder Ausgeben von Speisen;
- Fig. 6: eine Detailansicht des Behälters gemäß den Fign. 1-5 mit einem Verbindungsmodul zum Verbinden eines Deckels mit einem Grundkörper;
- Fig. 7-9: schematisch verschiedene Ansichten des Verbindungsmoduls der Fig. 6;
- Fig. 10: eine Schnittansicht des Verbindungsmoduls entlang einer Schnittlinie A-A der Fig. 7 mit einer Bremse;
- Fig. 11: eine Explosionsdarstellung der Bremse der Fig. 6;
- Fign. 12-13: zwei weitere Ansichten des Verbindungsmoduls der Fign. 6-11;
- Fign. 14: eine Schnittansicht eines Details des Verbindungsmoduls der Fig. 13 entlang einer Schnittlinie B-B;
- Fign. 15: eine Schnittansicht eines Details des Verbindungsmoduls der Fig. 12 entlang einer Schnittlinie C-C;
- Fig. 16: eine Schnittansicht einer weiteren Bremse mit eingezeichneten Kraftflüssen;
- Fig. 17: eine Schnittansicht einer weiteren Bremse;
- Fig. 18: eine Explosionsdarstellung des Verbindungsmoduls der Fig. 17;
- Fig. 19.: eine Schnittansicht einer weiteren Bremse;
- Fig. 20: verschiedene Ansichten eines am Deckel befestigten Formschlusselements.

In der nachfolgenden Beschreibung und in den Figuren sind wiederkehrende und funktionsgleiche Merkmale mit den gleichen Bezugszeichen versehen. Aus Übersichtlichkeitsgründen sind Bezugszeichen teilweise nicht in jedem Beispiel angegeben, auch wenn die zugehörigen Elemente im betreffenden Beispiel vorhanden sein können.

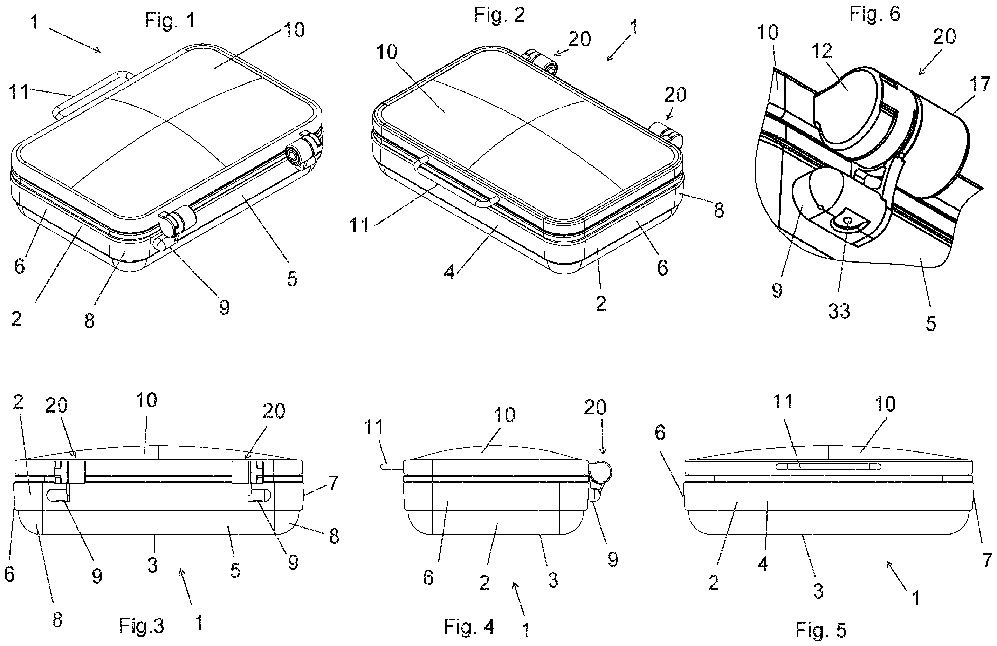

Die Fign. 1-5 zeigen verschiedene Ansichten eines Behälters 1 zum Aufnehmen, Warmhalten und/oder Ausgeben von Speisen. Der Behälter 1 umfasst einen wannenförmigen Grundkörper 2 und einen zwischen einer Schließstellung und einer Öffnungsstellung um eine Schwenkachse 40 schwenkbaren Deckel 10 zum Verschließen des Grundkörpers 2, wobei der Behälter 1 im geschlossenen Zustand gezeigt ist. Der Behälter 1 kann optional auf einem Gestell mit einer darunterliegenden Heizvorrichtung angeordnet werden, wobei als Heizvorrichtung oftmals Brennstoffdosen oder elektrische Heizelemente verwendet werden. Der Grundkörper 2 bildet in der Regel eine Aufnahme für ein ebenfalls wannenförmiges Wasserbadgefäß (nicht dargestellt), in der die Speisen warmgehalten werden können, wobei im Gebrauch des Behälters 1 sich zwischen dem Grundkörper 2 und dem Wasserbadgefäß typischerweise Wasser befindet, sodass das Wasserbadgefäß in einem Wasserbad liegt. Das Wasser wird dann durch die genannte die Heizvorrichtung erwärmt. Derartige Behälter 1 sind auch als "Chafing Dishes" bekannt und werden beispielsweise auf Büffets verwendet, um die Speisen warmzuhalten und zu präsentieren. Der Behälter 1 ist in verschiedenen Ausführungsformen bekannt, beispielsweise mit ebenen oder gewölbten Deckeln 10, die je nach Bedarf geöffnet bzw. geschlossen werden können. Um die Speisen auch in der Schließstellung des Deckels 10 zu sehen, kann der Deckel einen transparenten Bereich umfassen, welcher zum Beispiel durch eine Glasplatte oder Kunststoffplatte gebildet wird.

Der Grundkörper 2 hat typischerweise eine Bodenfläche 3, eine Vorderwand 4, eine Rückwand 5 und zwei Seitenwände 6, 7 und ist oftmals einstückig ausgebildet. Die Rückwand 5 umfasst in der Regel einen im Wesentlichen ebenen oder geraden Abschnitt, welcher über gekrümmte Übergangsbereiche 8 mit den Seitenwänden 6, 7 verbunden ist. Der Grundkörper 2 ist im Regelfall aus einem metallischen Material gefertigt, welches vorzugsweise säurefest, nicht rostend, geschmacksneutral, pfegeleicht und spülmaschinenfest ist, wobei Edelstahl wie Cromargan^{®} in vielen Fällen ein bevorzugtes Material darstellt.

Abgesehen von dem optionalen transparenten Bereich kann der Deckel 10 ebenfalls zumindest überwiegend aus einem metallischen Material, wie Edelstahl, vorzugsweise Cromargan^{®} gefertigt sein. Der Deckel 10 kann einen Griff 11 aufweisen, der das Öffnen und Schließen des Deckels 10 per Hand erleichtert.

In der nachfolgenden Beschreibung wird auf verschiedene Aspekte des Behälters 1 eingegangen. Gemäß einem ersten Aspekt ist mindestens eine Bremse 50 zum Abbremsen einer Schwenkbewegung des Deckels 10 und/oder zum Halten des Deckels 10 in einer Position zwischen einer Schließstellung und einer Öffnungsstellung vorgesehen. Gemäß einem weiteren Aspekt der vorliegenden Erfindung ist mindestens ein Verbindungsmodul 20 vorgesehen, welches den Deckel 10 mit dem Grundkörper 2 verbindet. Wie nachstehend erläutert, können die Bremse 50 und das Verbindungsmodul 20 miteinander kombiniert werden.

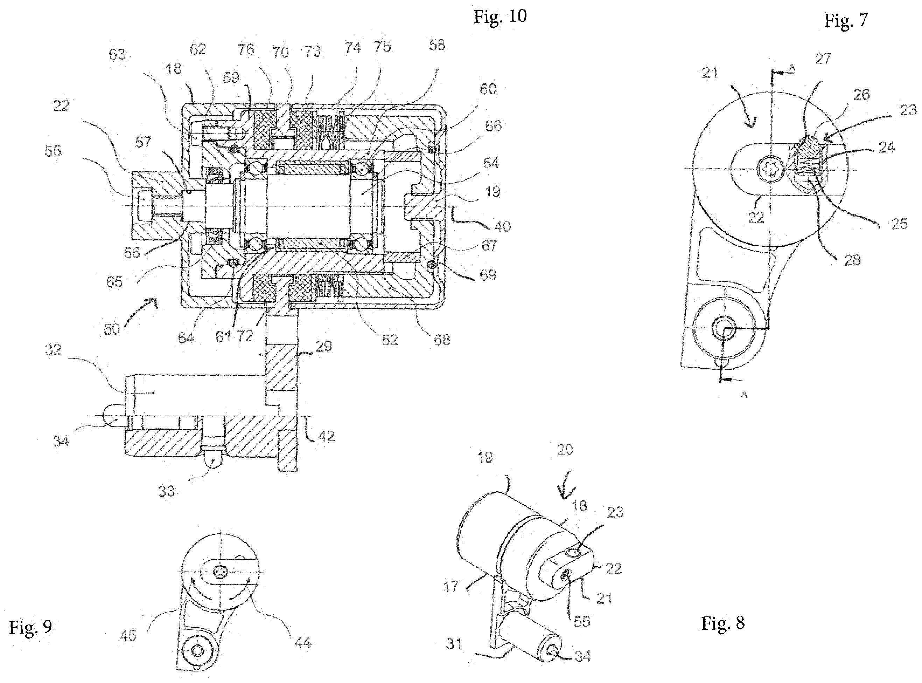

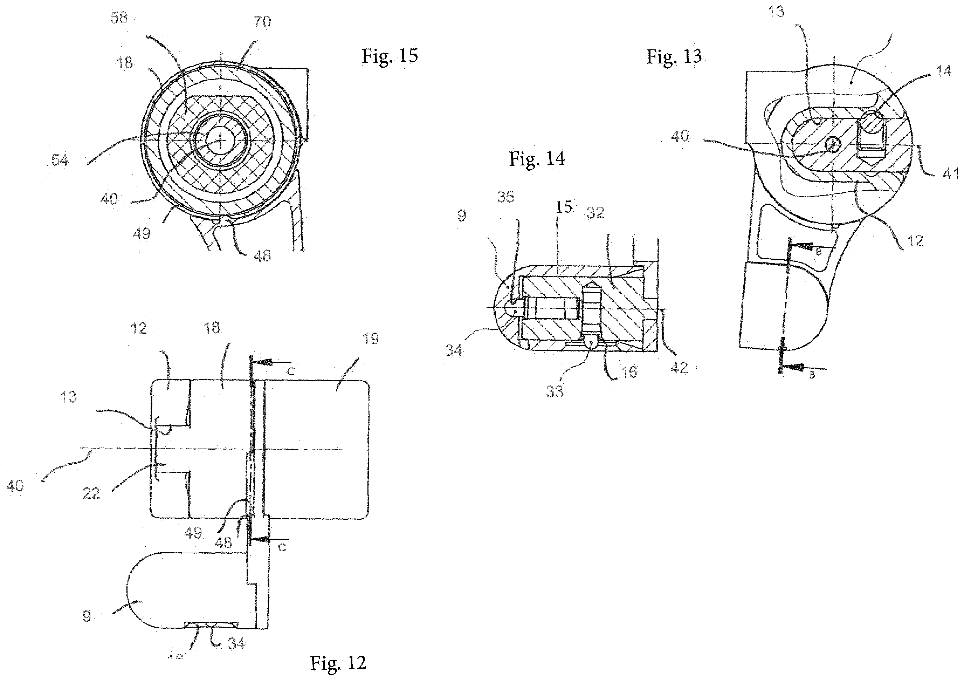

Zunächst wird auf das Verbindungsmodul 20 und dessen Merkmale eingegangen. Ein beispielhaftes Verbindungsmodul 20 ist näher in der Fig. 6 dargestellt, welche ein Detail des Behälters 1 der Fign. 1-5 zeigt. Weitere Ansichten, Schnittdarstellungen bzw. Explosionszeichnungen des Verbindungselements 20 sind in den Figuren 7-19 gezeigt.

Mit dem Verbindungsmodul 20 wird eine modulare Ankopplung des Deckels 10 an den Grundkörper 2 ermöglicht. Insbesondere kann das Verbindungsmodul 20 sowohl vom Grundkörper 2 als auch vom Deckel 10 abmontiert werden. Durch die Modularität der Ankopplung können die Elemente 2, 10, 20 des Behälters 1 einzeln ausgetauscht, repariert und/oder gereinigt werden.

Das Verbindungsmodul 20 umfasst mindestens eine Komponente 50 zum Beeinflussen einer Schwenkbewegung des Deckels 10. Die genannte Komponente kann insbesondere die Bremse 50 umfassen oder sein. Alternativ oder zusätzlich kann die genannte Komponente ein nicht dargestelltes Motorelement zum Bewegen des Deckels 10 zwischen der Schließstellung und der Öffnungsstellung umfassen oder sein. Das Verbindungsmodul 20 kann ein Gehäuse 17 mit einem ersten Gehäuseteil 18 und einem zweiten Gehäuseteil 19 aufweisen, welches die genannte Komponente 50 aufnehmen kann.

Das Verbindungsmodul 20 weist weiter ein erstes Verbindungselement 21 auf, welches lösbar mit dem Deckel 10 verbunden ist. Das erste Verbindungselement 21 weist üblicherweise ein erstes Formschlusselement 22 auf, welches als länglicher Vorsprung ausgebildet ist und zur Bildung eines ersten Formschlusses mit einem ersten am Deckel 10 befestigten oder angeformten Gegenstück 12 verbindbar ist, wobei das Gegenstück 12 komplementär zum ersten Formschlusselement 22 geformt ist.

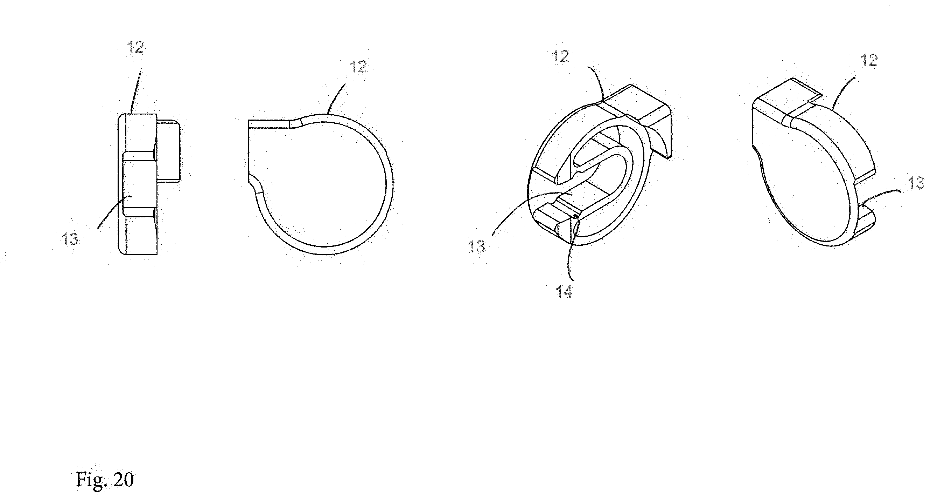

Verschiedene Ansichten des am Deckel 10 befestigten oder angeformten Formschlusselements 12 bzw. Gegenstücks 12 sind in der Fig. 20 gezeigt. In dem gezeigten Ausführungsbeispiel hat das erste Gegenstück 12 eine erste längliche Aufnahme 13, welche das erste Formschlusselement 12 formschlüssig aufnimmt. Durch den ersten Formschluss und die längliche Form des ersten Formschlusselements 22 ist das erste Verbindungselement 21 drehfest mit dem Deckel 10 verbunden. In der ersten Aufnahme 13 des Gegenstücks kann eine erste Arretierungsvertiefung 14 ausgebildet sein.

Das erste Formschlusselement 22 kann einstückig mit dem ersten Gehäuseteil 18 ausgebildet sein. Alternativ kann das erste Formschlusselement 22 auch als separates, mit dem ersten Gehäuseteil 18 verbundenes Bauteil vorliegen. Eine Längsachse 41 des ersten Formschlusselements 22 kann winklig, zum Beispiel senkrecht, zur Schwenkachse 40 des Deckels 10 ausgerichtet sein. Eine Ausrichtung der Längsachse 41 hängt weiter in der Regel vom momentanen Öffnungswinkel des Deckels 10 ab.

Weiter ist ein erstes federndes Druckstück 23 vorgesehen, welches bei Vorliegen des ersten Formschlusses in die erste Arretierungsvertiefung 14 einrastet. Das erste federnde Druckstück 23 unterstützt somit das Halten des ersten Formschlusselements 22 in der ersten Aufnahme 13 des Gegenstücks 12. Das erste Drückstück 23 ist in einer in dem ersten Formschlusselement 22 ausgebildeten Vertiefung 28 angeordnet, welche als Bohrung ausgestaltet sein kann. Die Fig. 7 enthält eine partielle Schnittdarstellung des ersten Druckstücks 23. Das Druckstück 23 umfasst in der Regel eine Hülse 24, eine Druckfeder 25 und ein von der Druckfeder 25 vorgespanntes Element 26, welches zum Beispiel als Kugel oder Stift ausgebildet sein kann. Das vorgespannte Element 26 ragt teilweise aus der Hülse 24 heraus und wird üblicherweise mittels eines durch die Hülse 24 gebildeten, radial nach innen vorstehenden Vorsprungs 27 in der Hülse 24 gehalten. Die Hülse 24 ist in der Vertiefung 28 befestigt. Optional kann die Hülse 24 weggelassen werden. In diesem Fall sind die Feder 25 und das vorgespannte Element 26 direkt in der Vertiefung 28 angeordnet.

Eine Längsachse des ersten Formschlusselements 22 und eine Längsachse der ersten Aufnahme 13 sind oftmals im geschlossenen Zustand des Deckels 10 senkrecht zur Schwerkraft ausgerichtet. Wenn der Deckel 10 einen Öffnungswinkel von 90° aufweist, erstrecken sich die genannten Längsachsen der Elemente 22, 13 parallel zur Schwerkraft. Falls der Deckel 10 in dieser Position angehoben wird, löst sich das Druckstück 23 aus der Arretierungsvertiefung 14, sodass der erste Formschluss gelöst werden kann und der Deckel 10 von dem Verbindungsmodul 20 abgenommen werden kann.

In dem gezeigten Beispiel wird also das erste Formschlusselement 22 durch die erste Aufnahme 13 des Gegenstücks 12 aufgenommen. Alternativ kann es auch vorgesehen sein, dass das erste Formschlusselement das Gegenstück aufnimmt (nicht dargestellt). In diesem Fall weist das erste Formschlusselement eine erste Aufnahme auf, welche vorzugsweise eine Arretierungsvertiefung aufweist. Weiter ist das Gegenstück in diesem Fall als Vorsprung ausgestaltet, welcher formschlüssig durch die erste Aufnahme aufgenommen werden kann. Das am Deckel befestigte Gegenstück kann dann das erste federnde Druckstück aufweisen.

Außerdem weist das Verbindungsmodul 20 ein zweites Verbindungselement 31 auf, welches lösbar mit dem Grundkörper 2 verbunden ist.

Das zweite Verbindungselement 31 ist mit einem am Grundkörper 2 vorgesehenen zweiten Gegenstück 9 formschlüssig verbunden. Hierzu kann das zweite Verbindungselement 31 ein zweites Formschlusselement 32 aufweisen, welches zur Bildung eines zweiten Formschlusses mit dem zweiten Gegenstück 9 verbindbar ist. Das zweite Gegenstück 9 ist komplementär zum zweiten Formschlusselement 32 geformt und nimmt das zweite Formschlusselement 32 formschlüssig auf. Im gezeigten Ausführungsbeispiel ist das zweite Gegenstück durch einen Lagerbock 9 realisiert, wobei das zweite Formschlusselement 32 als Bolzen ausgestaltet ist. Im Folgenden wird deshalb auf den Lagerbock 9 und den Bolzen 32 Bezug genommen. Andere komplementäre Formen sind für den zweiten Formschluss jedoch auch denkbar. Eine Längsachse 42 des Bolzens, also des zweiten Formschlusselements 32, verläuft in der Regel parallel zur Schwenkachse 40 des Deckels 10, vorzugsweise senkrecht zur Längsachse 41 und oftmals senkrecht zur Schwerkraft.

Der Lagerbock 9 hat üblicherweise eine zweite Aufnahme 15, welche den Bolzen 32 formschlüssig aufnimmt. In der Innenwandung der zweiten Aufnahme 15 kann eine zweite Arretierungsvertiefung 16 ausgebildet sein.

Weiterhin kann ein zweites federndes Druckstück 33 in dem Bolzen 32 verbaut sein, welches bei Vorliegen des zweiten Formschlusses in die zweite Arretierungsvertiefung 16 einrastet. Eine Längsachse des zweiten federnden Druckstücks 33 erstreckt sich meistens winklig zu der Längsachse 42 des Bolzens 32, wobei ein bevorzugter Winkel zwischen 80° und 100° liegen kann und insbesondere etwa 90° ist.

Die zweite Arretierungsvertiefung 16 kann als Durchgangsöffnung in dem Lagerbock 9 ausgestaltet sein, durch welche das zweite federnde Druckstück 33 hindurchragt. Dadurch hat ein Benutzer von außen Zugriff auf das zweite federnde Druckstück 33 und kann dieses per Fingerdruck betätigen. Anschließend kann der zweite Formschluss gelöst werden.

Optional kann ein drittes federndes Druckstück 34 vorgesehen sein, welches einerseits zum Fixieren/Zentrieren des zweiten Formschlusses beim Einrasten des zweiten Druckstücks 33 in die zweite Arretierungsvertiefung 16 und andererseits zum Unterstützen des Lösens des zweiten Formschlusses beim Drücken des zweiten Druckstücks 33 aus der zweiten Arretierungsvertiefung 16 ausgestaltet sein kann. Das dritte federnde Druckstück 34 ist vorzugsweise ebenfalls in dem Bolzen 32 verbaut; kann aber alternativ auch in der zweiten Aufnahme 15 im Lagerbock 9 angeordnet sein. Das dritte federnde Druckstück 34 ist im eingerasteten Zustand des zweiten federnden Druckstücks 33 vorgespannt und liegt an einer Innenwandung der zweiten Aufnahme 15 an. Optional kann das dritte federnde Druckstück 34 in eine dritte Arretierungsvertiefung 35, welche in der Aufnahme 15 ausgeformt ist, eingreifen. In einer Ausgestaltung, welche ebenfalls in den Figuren erkennbar ist, erstreckt sich eine Längsachse des dritten federnden Druckstücks 34 parallel zur Längsachse 42 des Bolzens 32 und damit senkrecht zu der Längsachse des zweiten federnden Druckstücks 33. Beim Lösen des zweiten Druckstücks 33 aus der zweiten Arretierungsöffnung 16 drückt das dritte federnde Druckstück 34 den Bolzen 32 zumindest teilweise aus der zweiten Aufnahme 15. So rückt das Verbindungsmodul 20 bei Betätigen des zweiten federnden Druckstücks 33 durch die Federkraft des dritten federnden Druckstücks 34 aus dem Lagerbock 9 aus, um so dem Bediener eine haptische und/oder akustische Rückmeldung zu geben, dass das Verbindungsmodul 20 bzw. die Bremse 50 gelöst und abnahmebereit ist.

Das zweite Druckstück 33 und/oder das dritte Druckstück 34 können in ähnlicher Weise aufgebaut sein wie das erste Druckstück 23. So kann das jeweilige Druckstück 33, 34 eine Hülse, eine Druckfeder und ein von der Druckfeder vorgespanntes Element aufweisen, welches zum Beispiel als Kugel oder Stift ausgebildet sein kann. Das vorgespannte Element ragt üblicherweise teilweise aus der Hülse heraus und wird mittels eines durch die Hülse gebildeten, radial nach innen vorstehenden Vorsprungs in der Hülse gehalten.

In dem gezeigten Beispiel wird somit das zweite Formschlusselement 32 durch die zweite Aufnahme 15 des Lagerbocks 9 formschlüssig aufgenommen. Alternativ kann es auch vorgesehen sein, dass das zweite Formschlusselement das Gegenstück aufnimmt (nicht dargestellt). In diesem Fall weist das zweite Formschlusselement eine zweite Aufnahme auf, welche vorzugsweise eine zweite Arretierungsvertiefung aufweist. Weiter ist das Gegenstück in diesem Fall als Vorsprung ausgestaltet, welcher formschlüssig durch die zweite Aufnahme aufgenommen werden kann. Der am Grundkörper 2 befestigte oder angeformte Vorsprung kann dann das zweite federnde Druckstück und dritte federnde Druckstück aufweisen.

Das Verbindungsmodul 20 kann ein starres Mittelstück 29 aufweisen, welches an einem ersten Ende mit dem ersten Verbindungselement 21 und/oder dem Gehäuse 17 und an einem gegenüberliegenden Ende mit dem zweiten Verbindungselement 31 verbunden ist.

In dem Behälter 1 der Figuren 1-5 sind zwei Verbindungsmodule 20 vorgesehen, welche spiegelsymmetrisch zueinander angeordnet sind. Eine Spiegelsymmetrieebene verläuft typischerweise parallel zu den Seitenwänden 6, 7 Bevorzugt zeigen die Längsachsen 42 der als Bolzen ausgestalteten zweiten Formschlusselemente 32 voneinander weg, und sind somit antiparallel zueinander ausgerichtet. Um den jeweiligen zweiten Formschluss zu lösen, müssen die Bolzen 32 somit in entgegengesetzten Richtungen aus den zweiten Aufnahmen 15 gezogen werden. Die Längsachsen 41 der ersten Formschlusselemente 22 sind vorzugsweise parallel zueinander ausgerichtet und zeigen in gleiche Richtung. Somit kann durch Ziehen am Deckel oder Anheben des Deckels 10, vorzugsweise bei einem Öffnungswinkel von etwa 90°, die ersten Formschlüsse gleichzeitig gelöst werden. Durch die Ausrichtung der Längsachsen 41, 42 folgt außerdem, dass der zweite Formschluss erst nach Abmontieren des Deckels 10 von dem jeweiligen Verbindungsmodul 20 gelöst werden kann. Die Verbindungsmodule 20 können somit nicht versehentlich mit dem Deckel 10 zusammen in die Spülmaschine landen. Hierdurch kann die typischerweise für Wasser und/oder Reinigungsmittel empfindliche Komponente 50 geschont werden und ihre Lebensdauer erhöht werden.

Wie bereits oben angedeutet ist jedes Verbindungsmodul 20 über einen am Grundkörper 2 befestigten, vorzugsweise angeschweißten, Lagerbock 9 mit dem Grundkörper 2 verbunden. Jeder Lagerbock 9 ist vorzugsweise an einer oberen Seite des ebenen Abschnitts der Rückwand 5 angeordnet. Außerdem grenzt der Lagerbock 9 vorzugsweise an den Übergangsbereich 8 an und ist somit außen (rechtsaußen bzw. linksaußen) an der Rückwand 5 positioniert. Grund für die nach außen gelegte Anbindung des Verbindungsmoduls 20 ist die Nutzung der Biegesteifigkeit der Seitenwände 6, 7 und der Übergangsbereiche 8. Dadurch kann eine Rückwandbiegung während des Öffnens und Schließens verhindert werden, und es kann auf zusätzliche Rückwandversteifungen verzichtet werden.

Nachfolgend wird näher auf die Bremse 50 eingegangen. Die als Reibbremse ausgestaltete Bremse 50 ist vorgesehen, um die Schwenkbewegung des Deckels 10 zu bremsen und den Deckel 10 in einer Position zwischen der Schließstellung und der Öffnungsstellung zu halten. Mit der Bremse 50 kann der Deckel 10 in einer Vielzahl von Positionen, vorzugsweise stufenlos, zwischen der Schließstellung und der Öffnungsstellung gehalten werden.

Die Bremse 50 weist einen Freilauf 52 auf, welcher eine Sperrrichtung 44 und eine Freilaufrichtung 45 definiert. Hierbei entspricht die Sperrrichtung 44 der Schließrichtung des Deckels 10 und die Freilaufrichtung 45 entspricht der Öffnungsrichtung des Deckels 10. Mit anderen Worten ist der Freilauf 52 derart mit einer Schwenkbewegung des Deckels 10 gekoppelt, dass die Bremse 50 den Deckel 10 in Schließrichtung bremst oder hält, nicht jedoch in Öffnungsrichtung. Der Freilauf 52 kann zum Beispiel als Hülsenfreilauf ausgestaltet sein.

Der Deckel 10 ist mit einer drehbaren Welle 54 gekoppelt, welche eine Drehachse oder Schwenkachse 40 definiert. Die Welle 54 kann einen sich in axialer Richtung erstreckenden, nicht kreisrunden Vorsprung 56 aufweisen, welcher formschlüssig in eine entsprechende Aussparung 57 im ersten Gehäuseteil 18 eingreift. Ein Befestigungsmittel, wie eine Schraube 55, kann vorgesehen sein, um die Welle 54 an dem ersten Gehäuseteil 18 zu befestigen.

Optional kann eine Lagerbuchse 58 vorgesehen sein, welche die Welle 54 umgreift. Die Lagerbuchse 58 kann einen Innenraum der Bremse 50 definieren, in dem sich der Freilauf 52 befindet. Der Freilauf 52 ist vorzugsweise radial zwischen der Lagerbuchse 58 und der Welle 54 angeordnet. Im gezeigten Beispiel ist der Freilauf 52 direkt auf der Welle 54 angeordnet, es befinden sich somit keine weiteren Bauteile zwischen dem Freilauf 52 und der Welle 54. Weiter sind zwei Wälzlager 60 vorgesehen, welche auf beiden Seiten des Freilaufs 52 auf der Welle 54 angeordnet sind. Die Wälzlager 60 können z.B. Rillenkugellager ausgebildet sein und sind in der Regel radial zwischen der Lagerbuchse 58 und der Welle 54 angeordnet. Die Wälzlager 60 ermöglichen eine Drehung der Welle 54 relativ zur Lagerbuchse 58.

Optional kann die Lagerbuchse 58 einen umlaufenden, radial nach innen zeigenden Vorsprung 61 aufweisen, welcher in axialer Richtung oftmals einerseits an den Wälzlager 60 und andererseits an den Freilauf 52 angrenzt. Es können zwei Sicherungsringe 66 vorgesehen sein, welche jeweils an die Kugellager 60 angrenzen und eine axiale Begrenzung für die Kugellager 60 bilden. Die Lagerbuchse 58 kann außerdem eine Schulter 59 aufweisen, welche radial nach außen zeigt. Die Wälzlager 60 sind ebenfalls in dem durch die Lagerbuchse 58 definierten Innenraum angeordnet.

Die Welle 54 kann eine Vielzahl von Stufen aufweisen, welche sich in radialer Richtung erstrecken und in axialer Richtung nebeneinander angeordnet sind. Die Elemente 53, 50 und 66 können jeweils auf einer Stufe unterschiedlicher radialer Höhe angeordnet sein.

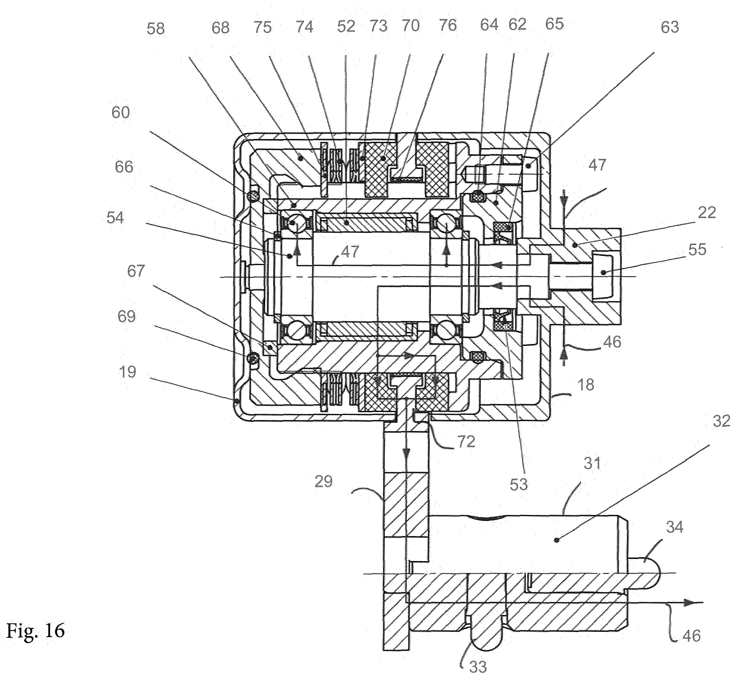

Zur Abdeckung des durch die Lagerbuchse 58 umschlossenen Innenraums der Bremse 50 kann ein erster Deckel 62 vorgesehen sein. Die Lagerbuchse 58 kann drehfest mit dem ersten Deckel 62 verbunden sein, z.B. mittels Schrauben 63, welche beispielsweise in die Schulter 59 eingreifen. Zur Abdichtung kann radial zwischen der Lagerbuchse 58 und dem ersten Deckel 62 ein Dichtelement 64 wie ein O-Ring vorgesehen sein, welcher aus einem elastischen Material geformt sein kann. Zur weiteren Abdichtung kann radial zwischen dem Deckel 62 und der Welle 54 ein weiteres Dichtelement wie ein Radialwellendichtring 65 vorgesehen sein. Der Radialwellendichtring 65 definiert einen Bereich 53, welcher zur Schmierung und weiteren Abdichtung mit Schmiermittel wie Fett gefüllt ist (vgl. Fig. 16).

Durch den O-Ring 64 und den Radialwellendichtring 65 ist der Innenraum der Bremse 50, in dem sich der Hülsenfreilauf 52 und die Kugellager 60 befinden, hinreichend gegen Wasser und Feuchtigkeit geschützt.

Auf der axial anderen Seite kann die Lagerbuchse 58 mit einem zweiten Deckel 68 verbunden sein. Der erste Deckel 62 und der zweite Deckel 68 können also auf axial gegenüberliegenden Seiten der Lagerbuchse 58 angeordnet sein. Der zweite Deckel 68 weist hierzu vorzugsweise ein Innengewinde auf, welches mit einem Außengewinde der Lagerbuchse 58 verschraubt werden kann. Axial zwischen dem zweiten Deckel 68 und der Lagerbuchse kann ein Distanzring 67 oder Distanzhülse angeordnet sein. Axial zwischen dem zweiten Deckel 68 und dem zweite Gehäuseteil 19 kann ein Sicherungsring O-Ring 69 vorgesehen sein. Der O-Ring dient zur Abdichtung gegen Flüssigkeiten von außen, die sonst durch das kleine Gewinde in Element 68 eindringen könnte. Vorzugsweise kann zum Beispiel eine Dichtpaste zumindest bereichsweise zwischen den Elementen 68, 67 und 58 angeordnet sein, um diesen Bereich gegen Feuchtigkeit von außen abzudichten.

Der erste Deckel 62 und der zweite Deckel 68 können zusammen mit der Lagerbuchse 58 als inneres Gehäuse aufgefasst werden, während das erste Gehäuseteil 18 und das zweite Gehäuseteil 19 als äußeres Gehäuse aufgefasst werden können.

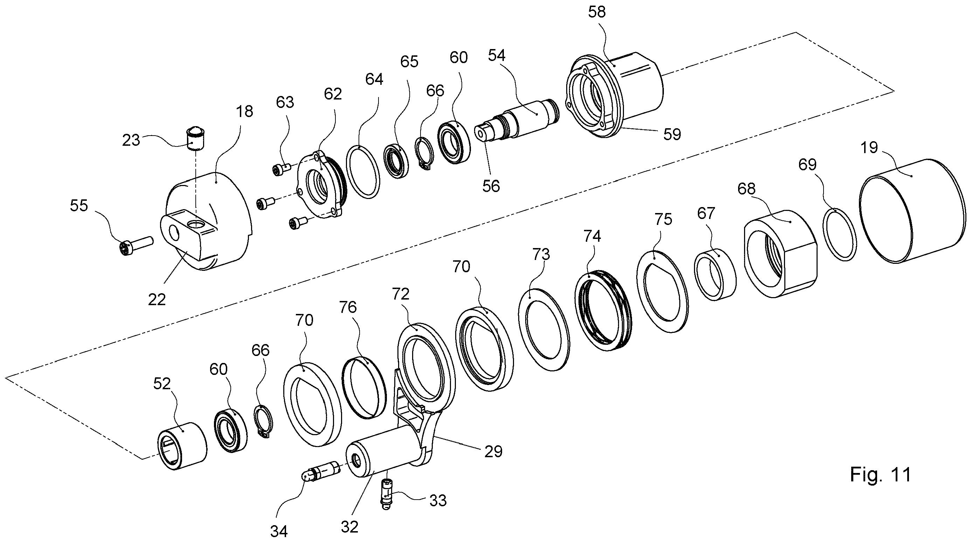

Die Fig. 11 zeigt eine Explosionsdarstellung der Bremse 50 bzw. des Verbindungsmoduls 20. In der Fig. 11 ist erkennbar, die Lagerbuchse 58 radial außen in Umlaufrichtung typischerweise einen runden Abschnitt sowie einen flachen Abschnitt umfasst. Der flache Abschnitt der Lagerbuchse 58 eignet sich insbesondere für einen drehfesten Formschluss mit auf der Lagerbuchse 58 angeordneten Bauteilen.

Die Bremse 50 kann außerdem mindestens einen Bremsbelag 70, vorzugsweise zwei Bremsbeläge 70, und eine Bremsscheibe 72 aufweisen. Der in dieser Schrift verwendete Begriff der "Bremsscheibe" wurde in Analogie zu einer Scheibenbremse eines Fahrzeuges und wegen der scheibenartigen Form des Elements 72 gewählt. Abweichend von einer in einem Fahrzeug eingesetzten Scheibenbremse drehen sich jedoch die Bremsbeläge 70, während die Bremsscheibe 72 ruht. Statt des Begriffs "Bremsscheibe" können auch Formulieren wie "Bremshebel" oder "Bremsarm" verwendet werden.

Die Bremsbeläge 70 sind üblicherweise auf der Lagerbuchse 58 angeordnet und können auf ihrer Innenseite einen flachen Abschnitt aufweisen, um einen drehfesten Formschluss mit der Lagerbuchse 58 zu ermöglichen. Die Bremsscheibe 72 ist in der Regel fest mit dem starren Mittelstück 29 verbunden, und daher ruhend in Bezug auf den Grundkörper 2 angeordnet. Die Bremsbeläge 70 sind in axialer Richtung auf beiden Seiten der Bremsscheibe 72 angeordnet. Vorzugsweise ist ein Federelement 74 vorgesehen, welches die Bremsbeläge 70 und die Bremsscheibe 72 in axialer Richtung zusammendrückt. Das Federelement 74 kann zum Beispiel als Wellenfeder ausgestaltet sein. Zwischen dem Bremsbelag 70 und dem Federelement 74 kann eine Passscheibe 73 angeordnet sein, welche eine Federkraft des Federelements 74 gleichmäßig auf den Bremsbelag 70 verteilt. Auf der axial anderen Seite des Federelements 74 kann eine weitere Scheibe 75 mit Formschluss angeordnet sein, welche an einer Stirnseite des zweiten Deckels 68 anliegt. Zweck dieser Scheibe 75 ist, dass beim Aufschrauben des zweiten Deckels 68 die Wellenfeder 74 nicht tordiert wird. Radial zwischen der Bremsscheibe 72 und der Lagerbuchse 28 kann ein Gleitlager 76 angeordnet sein, welches eine Drehung der Lagerbuchse 58 relativ zur Bremsschreibe 72 ermöglicht.

Der größtmögliche Öffnungswinkel des Deckels 10 kann durch einen am Mittelstück 29 befindlichen Anschlag 48 festgelegt werden, wobei der Anschlag 48 manchmal als Nase bezeichnet wird. Die Schwenkbewegung des Deckels 10 wird somit durch diesen Anschlag 48 begrenzt. Der Anschlag 48 greift in eine schlitzförmige Aussparung 49 ein, welche beispielsweise axial zwischen der Bremsscheibe 72 und dem ersten Gehäuseteil 18 verläuft und sich in Umfangsrichtung erstreckt.

Nachfolgend wird die Wirkungsweise einer ähnlichen Bremse 50 anhand der Fig. 16 beschrieben. Die Fig. 16 zeigt einen Schnitt einer Bremse 50 und eines Verbindungsmoduls 20, welche links am Behälter 1 befestigt sind, während die Bremse 50 und das Verbindungsmodul 20 der Fig. 10 rechts am Behälter 1 befestigt sind. Außerdem ist die Bremse 50 der Fig. 16 axial etwas kürzer ausgeführt als die Bremse 50 der Fig. 10. Funktionsgleiche Merkmale sind mit den gleichen Bezugszeichen versehen und auf eine Wiederholung der Beschreibung wird hier verzichtet.

In der Fig. 16 sind mittels Pfeilen 46, 47 zwei Kraftflüsse eingezeichnet. Die Pfeile 47 geben hierbei den Kraftfluss beim Öffnen des Deckels 10 an, während die Pfeile 46 den Kraftfluss beim Schließen des Deckels 10 angeben.

Wie oben geschildert ist der Deckel 10 über das erste Formschlusselement 22 drehfest mit dem ersten Gehäuseteil 18 und mit der Welle 54 verbunden. Die Öffnungsrichtung des Deckels 10 korrespondiert mit der Freilaufrichtung 45 der Welle 54 und des Freilaufs 52, sodass sich die Welle 54 beim Öffnen des Deckels 10 mit dreht. Beim Öffnen des Deckels 10 wird das Drehmoment somit nicht an den Bremsmechanismus weitergegeben und die Bremse 50 wird in diesem Fall also nicht betätigt. Hierdurch drehen insbesondere die Bauteile 19, 58, 68, 70 nicht mit. Der mindestens eine Bremsbelag 70 und die Bremsscheibe 72 ruhen in Freilaufrichtung 45 der Welle 54 relativ zueinander.

Falls nun andersherum der Deckel 10 von einer geöffneten Stellung in Schließrichtung gedreht wird, wird die Drehung der Welle 54 von dem Freilauf 52 per Kraftschluss auf die Lagerbuchse 58 übertragen. Von der Lagerbuchse 58 wird das Drehmoment mittels Formschluss in die Bremsbeläge 70 geleitet. Die Bremsbeläge 70 werden durch das Federelement 74 gegen die axialen Stirnseiten der Bremsscheibe 72 gedrückt. In Sperrrichtung 44 der Welle 54 wird eine Relativbewegung des Bremsbelags 70 und der Bremsscheibe 72 abgebremst, und die Bremswirkung wird damit durch die Reibung zwischen den Bremsbelägen 70 und der Bremsscheibe 72 erzeugt. Insgesamt werden somit die Drehung der Welle 54 und die Schwenkbewegung des Deckels 10 abgebremst. Die auf die Bremsscheibe 72 ausgeübte Kraft fließt über das Mittelstück 29 und das zweite Verbindungselement 21 auf den Lagerbock 9 und den Behälter 1 ab. Falls keine Handkraft ausgeübt wird, und lediglich die Schwerkraft auf den Deckel 10 wirkt, sorgt die Bremse 50 dafür, dass der Deckel 10 in seiner Position gehalten wird. Die Bremskraft ist hierbei vorzugsweise derart ausgelegt, dass der Deckel 10 stufenlos und spielfrei in jeder Position zwischen der Schließstellung und der Öffnungsstellung gehalten wird. Dies bedeutet auch, dass für das Schließen des Deckels 10 eine leichte Handkraft zur Überwindung der Haltekraft der Bremse 50 erforderlich ist. Diese erforderliche Handkraft ist in einer komplett geöffneten Stellung bei etwa 90° am größten und nimmt durch den wachsenden Einfluss der Schwerkraft beim Schließen des Deckels 10 stetig ab.

Das zwischen der Bremsscheibe 72 und der Lagerbuchse 58 angeordnete Gleitlager 76 erlaubt eine relative Drehbewegung der Lagerbuchse 58 relativ zur Bremsscheibe 72. Beim Schließen des Deckels 10 drehen somit unter anderem auch die Bauteile 19, 58, 68, 70 und die damit drehfest verbundenen Bauteile mit.

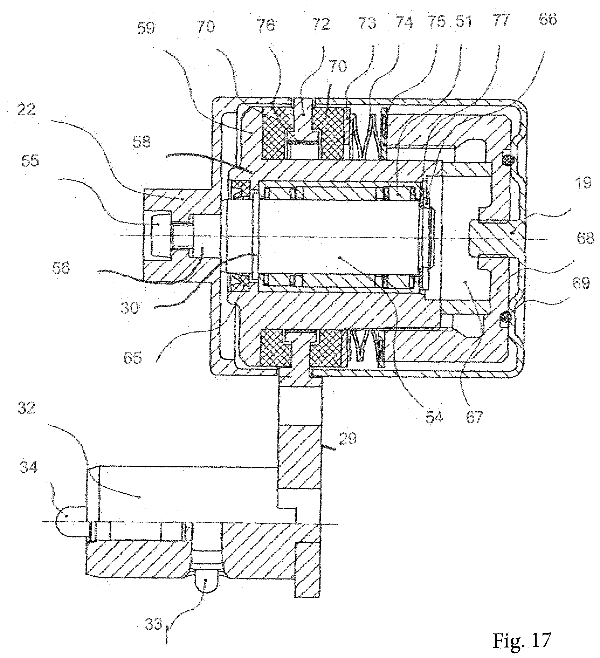

Die Fig. 17 zeigt einen Längsschnitt einer ähnlichen Bremse 50, welche einen einfacheren Aufbau besitzt als die in der Schnittdarstellung der Fig. 10 gezeigten Bremse 50. In der Fig. 17 sind gleiche Merkmale mit gleichen Bezugszeichen versehen, und auf eine Wiederholung der Beschreibung wird hier verzichtet.

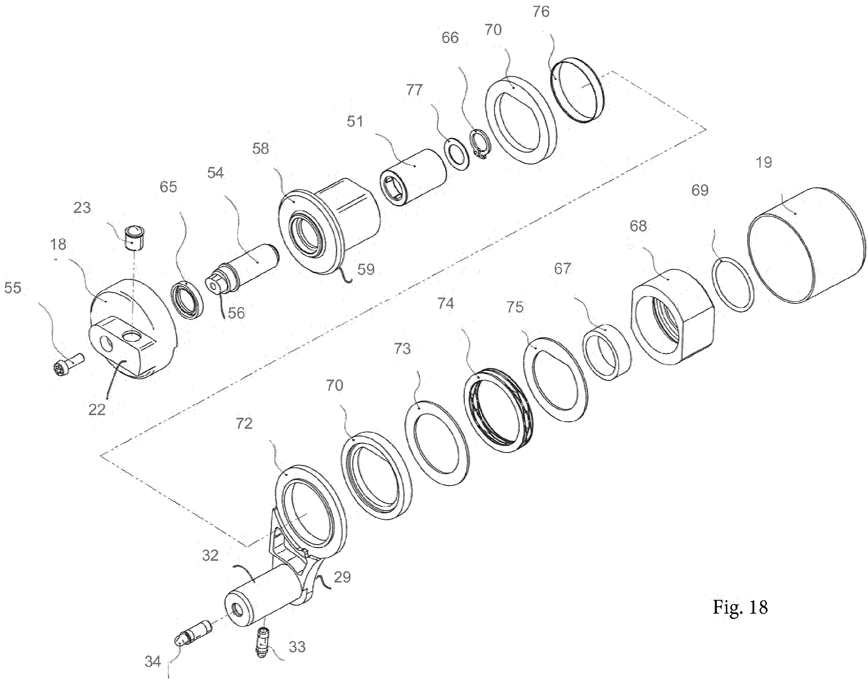

Die Bremse 50 weist einen als Hülsenfreilauf ausgestalteten Freilauf 51 auf, in dem zwei Wälzlager integriert sind. Somit können auf die separaten Wälzlager 60 der Fig. 10 verzichtet werden. Außerdem entfällt in der Ausführungsform der Fig. 17 der erste Deckel 62. Eine optionale radiale Schulter 30 der Welle 54 begrenzt den Freilauf 51 in axialer Richtung, sodass auch auf einen Sicherungsring 66 in diesem Bereich verzichtet werden kann. Auf der anderen Seite der Welle 54 ist eine Passscheibe 77 axial zwischen dem Sicherungsring 66 und dem Freilauf 51 angeordnet. Insgesamt kommt die Bremse 50 der Fig. 17 somit mit weniger Bauteilen aus als die Bremse 50 der Fig. 10, s. auch die Explosionszeichnung der Bremse 50 in der Fig. 18.

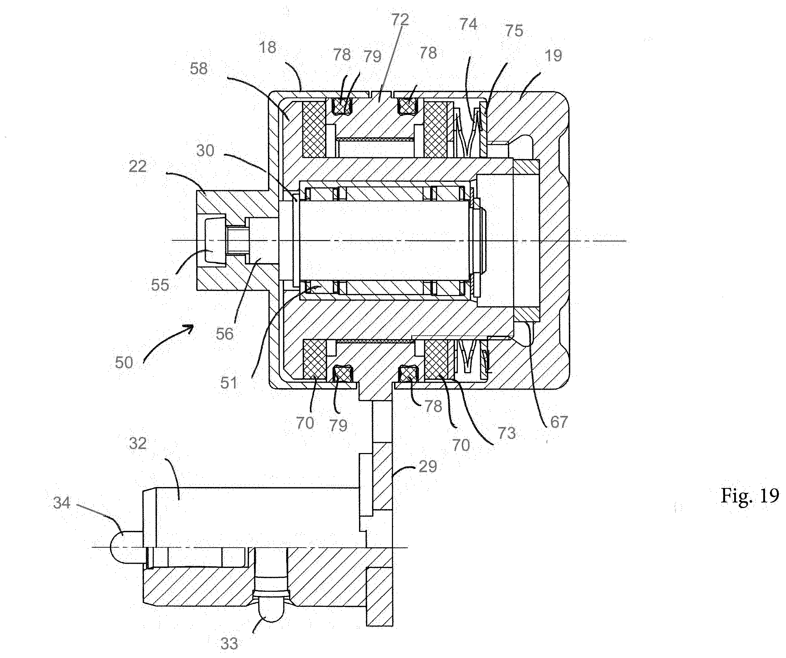

Eine weitere Ausgestaltung der Bremse 50 ist in der Fig. 19 gezeigt, welche einen Längsschnitt der Bremse 50 offenbart.

Die Bremse der Fig. 19 ähnelt der Bremse 50 der Fig. 17 dahingehend, dass die Wälzlager in dem der Freilauf 51 integriert sind und auf den ersten Deckel 62 der Bremse 50 der Fig. 10 verzichtet wurde. Anstelle der Radialwellendichtung 65 der Fig. 17 ist in der Bremse der Fig. 19 jedoch ein optionaler Dichtring 78 vorgesehen, welcher das System nach außen radial abdichtet. Der Dichtring 78 befindet sich typischerweise zwischen der Bremsscheibe 72 und dem ersten Teilgehäuse 18. Vorzugsweise ist der Dichtring 78 in eine Nut 79 der Bremsscheibe 72 eingelassen. Ein weiterer Dichtring 78 kann zwischen der Bremsscheibe 72 und dem zweiten Teilgehäuse 19 angeordnet sein, vorzugsweise ebenfalls in einer Nut 79 der Bremsscheibe 72. Da sich die berührenden Mantelflächen der Teilgehäuse 18, 19 relativ radial zu den Dichtungen 78 bewegen, können für die Dichtungen 78 optional Quad-Ringe gewählt werden, die in der Regel ein Schmiermittelreservoir haben, wodurch die Reibung minimiert wird. Im Bereich der Schraube 55 und/oder zwischen Welle 56 und Anlageschulter des ersten Gehäuseteils 18 kann zur Abdichtung noch eine Dichtpaste und/oder ein zusätzliches Dichtelement vorgesehen werden, um das System gegen Feuchtigkeit von außen abzuschirmen.

Eine weitere Besonderheit der Ausführungsform der Fig. 19 ist, dass auf den zweiten Deckel 68 verzichtet wurde. Stattdessen wird das zweite Gehäuseteil 19 direkt mit der Lagerbuchse 58 verbunden, typischerweise über eine Schraubverbindung. Hierdurch werden weniger Teile benötigt.

### Bezugszeichenliste:

- 1: Behälter
- 2: Grundkörper
- 3: Bodenfläche
- 4: Vorderwand
- 5: Rückwand
- 6: Seitenwand
- 7: Seitenwand
- 8: Übergangsbereich
- 9: Lagerbock
- 10: Deckel
- 11: Griff
- 12: erstes Gegenstück
- 13: erste Aufnahme
- 14: erste Arretierungsvertiefung
- 15: zweite Aufnahme
- 16: zweite Arretierungsvertiefung
- 17: Gehäuse
- 18: erstes Gehäuseteil
- 19: zweites Gehäuseteil
- 20: Verbindungsmodul
- 21: erstes Verbindungselement
- 22: erstes Formschlusselement
- 23: erstes federndes Druckstück
- 24: Hülse
- 25: Druckfeder
- 26: vorgespanntes Element
- 27: Vorsprung
- 28: Vertiefung
- 29: Mittelstück
- 30: radiale Schulter
- 31: zweites Verbindungselement
- 32: zweites Formschlusselement
- 33: zweites federndes Druckstück
- 34: drittes federndes Druckstück
- 35: dritte Arretierungsvertiefung
- 40: Schwenkachse des Deckels
- 41: Längsachse des ersten Formschlusselements 22
- 42: Längsachse des zweiten Formschlusselements 32
- 44: Sperrrichtung
- 45: Freilaufrichtung
- 46: Kraftfluss beim Schließen des Deckels
- 47: Kraftfluss beim Öffnen des Deckels
- 48: Anschlag
- 49: schlitzförmige Aussparung
- 50: Bremse
- 51: Freilauf
- 52: Freilauf
- 53: mit Schmiermittel gefüllter Bereich
- 54: Welle
- 55: Befestigungsmittel
- 56: axialer Vorsprung
- 57: Aussparung
- 58: Lagerbuchse
- 59: Schulter
- 60: Wälzlager
- 61: Vorsprung
- 62: erster Deckel
- 63: Schraube
- 64: O-Ring
- 65: Radialwellendichtring
- 66: Sicherungsring
- 67: Distanzring
- 68: zweiter Deckel
- 69: O-Ring
- 70: Bremsbelag
- 72: Bremsschreibe
- 73: Passscheibe
- 74: Federelement
- 75: Scheibe mit Formschluss
- 76: Gleitlager
- 77: Passscheibe
- 78: Quad-Ring
- 79: Nut

## Patentansprüche

1. Behälter (1) zum Aufnehmen, Warmhalten und/oder Ausgeben von Speisen, umfassend
- einen wannenförmigen Grundkörper (2),
- einen zwischen einer Schließstellung und einer Öffnungsstellung schwenkbaren Deckel (10) zum Verschließen des Grundkörpers (2) und
- ein Verbindungsmodul (20) zum Verbinden des Deckels (10) mit dem Grundkörper (2),
wobei das Verbindungsmodul (20) ein erstes Verbindungselement (21) aufweist, welches lösbar mit dem Deckel (10) verbunden ist,
wobei das Verbindungsmodul (20) ein zweites Verbindungselement (31) aufweist, welches lösbar mit dem Grundkörper (2) verbunden ist,
wobei das Verbindungsmodul (20) mindestens eine Komponente (50) zum Beeinflussen einer Schwenkbewegung des Deckels (10) aufweist, wobei das erste Verbindungselement (21) ein erstes Formschlusselement (22) aufweist, welches zur Bildung eines ersten Formschlusses mit einem ersten am Deckel (10) befestigten Gegenstück (12) verbindbar ist,
wobei ein erstes federndes Druckstück (23) vorgesehen ist, welches bei Vorliegen des ersten Formschlusses in eine erste Arretierungsvertiefung (14) einrastet, und/oder
wobei das zweite Verbindungselement (31) ein zweites Formschlusselement (32) aufweist, welches zur Bildung eines zweiten Formschlusses mit einem zweiten am Grundkörper (2) befestigten Gegenstück (9) verbindbar ist,
wobei ein zweites federndes Druckstück (33) vorgesehen ist, welches bei Vorliegen des zweiten Formschlusses in eine zweite Arretierungsvertiefung (16) einrastet.

2. Behälter (1) nach Anspruch 1, wobei das erste federnde Druckstück (23) im ersten Formschlusselement (32) verbaut ist und die erste Arretierungsvertiefung (14) in dem ersten Gegenstück (12) ausgebildet ist.

3. Behälter (1) nach einem der Ansprüche 1 und 2, wobei eine Längsachse (41) des ersten Formschusselements (22) und eine Längsachse des ersten Gegenstücks (12) sich bei einem bestimmten Öffnungswinkel, insbesondere 90°, des Deckels (10) parallel zur Schwerkraft erstrecken, sodass die formschlüssige Verbindung des Deckels (10) mit dem ersten Verbindungselement (21) durch Anheben des Deckels (10) gelöst werden kann.

4. Behälter (1) gemäß einem der Ansprüche 1 bis 3, wobei das zweite Formschlusselement (32) in eine im zweiten Gegenstück (9) ausgebildete zweite Aufnahme (15) eingreift,
wobei die zweite Arretierungsvertiefung (16) in einer Innenwandung der zweiten Aufnahme (15) ausgebildet ist,
wobei das zweite federnde Druckstück (33) im zweiten Formschlusselement (32) verbaut ist und sich winklig, vorzugsweise senkrecht, zu einer Längsachse (42) des zweiten Formschlusselements (32) erstreckt.

5. Behälter (1) nach einem der Ansprüche 1 bis 4, wobei zum Lösen des zweiten Formschlusses ein drittes federndes Druckstück (34) vorgesehen ist, welches im eingerasteten Zustand des zweiten federnden Druckstücks (33) vorgespannt ist, und ausgestaltet ist, beim Lösen des zweiten Druckstücks (33) aus der zweiten Arretierungsvertiefung (16) das zweite Formschlusselement (32) zumindest teilweise aus der Aufnahme zu drücken.

6. Behälter (1) nach den Ansprüchen 4 und 5, wobei das dritte federnde Druckstück (34) im zweiten Formschlusselement (32) verbaut ist und im eingerasteten Zustand des zweiten federnden Druckstücks (33) an der Innenwandung der zweiten Aufnahme (15) anliegt.

7. Behälter (1) nach einem der vorstehenden Ansprüche, wobei das Verbindungsmodul (20) ein Gehäuse (17) zum Aufnehmen der mindestens einen Komponente (50) zum Beeinflussen einer Schwenkbewegung des Deckels (10) aufweist.

8. Behälter (1) nach einem der vorstehenden Ansprüche, wobei an dem Grundkörper (2) mindestens ein Lagerbock (9) zum Verbinden mit dem zweiten Verbindungselement (31) vorgesehen ist.

9. Behälter (1) nach einem der vorstehenden Ansprüche, wobei der Grundkörper (2) eine Bodenfläche (3), eine Vorderwand (4), eine Rückwand (5) und zwei Seitenwände (6, 7) aufweist, wobei das Verbindungsmodul (20) vorzugsweise an der Rückwand (5) des Grundkörpers (2), insbesondere an einer oberen Seite der Rückwand (5) befestigt ist.

10. Behälter (1) nach einem der vorstehenden Ansprüche, mit zwei Verbindungsmodulen (20), wobei die Längsrichtungen (41) der ersten Formschlusselemente (22) sich parallel zueinander erstrecken und in dieselbe Richtung zeigen, wobei die Längsrichtungen (42) der zweiten Formschlusselemente (32) parallel zueinander verlaufen, jedoch entgegengesetzt gerichtet sind.

11. Behälter nach Anspruch 9 und Anspruch 10, wobei die Rückwand (5) sich in seitlicher Richtung von einem ersten Endabschnitt bis zu einem zweiten Endabschnitt erstreckt, wobei die Endabschnitte jeweils mit einer Seitenwand (6, 7) verbunden sind, wobei die Verbindungsmodule (20) in den Endabschnitten der Rückwand (5) befestigt sind.

12. Behälter (1) nach einem der vorstehenden Ansprüche, die Komponente zum Beeinflussen der Schwenkbewegung des Deckels (10) umfassend:
- eine Bremse (50) zum Abbremsen einer Schwenkbewegung des Deckels (10) und/oder zum Halten des Deckels (10) in einer Position zwischen der Schließstellung und der Öffnungsstellung und/oder
- ein Motorelement zum Bewegen des Deckels (10) zwischen der Schließstellung und der Öffnungsstellung.

## Claims

1. A container (1) for receiving, keeping warm and/or serving food, comprising:
- a trough-shaped base body (2);
- a lid (10) for closing the base body (2) which can be pivoted between a closed position and an open position; and
- a connecting module (20) for connecting the lid (10) to the base body (2),
the connecting module (20) comprising a first connecting element (21), which is detachably connected to the lid (10),
the connecting module (20) comprising a second connecting element (31), which is detachably connected to the base body (2),
the connecting module (20) comprising at least one component (50) for influencing a pivoting movement of the lid (10),
wherein the first connecting element (21) comprises a first form fit element (22), which can be connected to a first counter-piece (12) attached to the lid (10) for forming a first form fit, wherein a first spring plunger (23) is provided, which latches in a first locking depression (14) when the first form fit is present, and/or
wherein the second connecting element (31) comprises a second form fit element (32), which can be connected to a second counter-piece (9), which is attached to the lid (2), for forming a second form fit, wherein a second spring plunger (33) is provided, which latches in a second locking depression (16) when the second form fit is present.

2. The container (1) according to claim 1, wherein the first spring plunger (23) is installed in the first form fit element (32), and the first locking depression (14) is formed in the first counter-piece (12).

3. The container (1) according to any one of claims 1 to 2, wherein, at a certain opening angle, in particular 90°, of the lid (10), a longitudinal axis (41) of the first form fit element (22) and a longitudinal axis of the first counter-piece (12) extend parallel to the force of gravity, so that the form-locked connection between the lid (10) and the first connecting element (21) can be released by lifting of the lid (10).

4. The container (1) according to any of claims 1-3, wherein the second form fit element (32) engages in a second receptacle (15) formed in the second counter-piece (9),
the second locking depression (16) being formed in an inner wall of the second receptacle (15),
the second spring plunger (33) being installed in the second form fit element (32) and extending at an angle, preferably perpendicularly, with respect to a longitudinal axis (42) of the second form fit element (32).

5. The container (1) according to any one of claims 1-4, wherein a third spring plunger (34), which is preloaded when the second spring plunger (33) is latched and which is configured to push the second form fit element (32) at least partially out of the receptacle when the second pressure piece (33) is released from the second locking depression (16), is provided for releasing the second form fit.

6. The container (1) according to claims 4 and 5, wherein the third spring plunger (34) is installed in the second form fit element (32) and rests against the inner wall of the second receptacle (15) when the second spring plunger (33) is latched.

7. The container (1) according to any one of the preceding claims,
wherein the connecting module (20) comprises a housing (17) for accommodating the at least one component (50) for influencing a pivoting movement of the lid (10).

8. The container (1) according to any one of the preceding claims,
wherein at least one bearing pedestal (9) is provided at the base body (2) for the connection to the second connecting element (31).

9. The container (1) according to any one of the preceding claims,
wherein the base body (2) comprises a bottom surface (3), a front wall (4), a rear wall (5) and two side walls (6, 7), the connecting module (20) preferably being attached to the rear wall (5) of the base body (2), and in particular to an upper side of the rear wall (5).

10. The container (1) according to any one of the preceding claims, comprising two connecting modules (20), the longitudinal directions (41) of the first form fit elements (22) extending parallel to one another and pointing in the same direction, and the longitudinal directions (42) of the second form fit elements (32) running parallel to one another, but being oriented in opposite directions.

11. The container according to claim 9 and claim 10, wherein the rear wall (5) extends in the lateral direction from a first end section to a second end section, the end sections being each connected to a side wall (6, 7), and the connecting modules (20) being attached to the rear wall (5) in the end sections.

12. The container (1) according to any one of the preceding claims, the component for influencing the pivoting movement of the lid (10) comprising:
- a brake (50) for braking a pivoting movement of the lid (10) and/or for holding the lid (10) in a position between the closed position and the open position and/or
- a motor element for moving the lid (10) between the closed position and the open position.

## Revendications

1. Récipient (1) pour recevoir, maintenir au chaud et/ou distribuer des aliments, comprenant
- un corps de base (2) en forme de cuvette,
- un couvercle (10) pouvant pivoter entre une position de fermeture et une position d'ouverture pour fermer le corps de base (2) et
- un module de liaison (20) pour relier le couvercle (10) au corps de base (2),
dans lequel le module de liaison (20) présente un premier élément de liaison (21), lequel est relié de manière amovible au couvercle (10),
dans lequel le module de liaison (20) présente un deuxième élément de liaison (31), lequel est relié de manière amovible au corps de base (2),
dans lequel le module de liaison (20) présente au moins un composant (50) pour influencer un mouvement de pivotement du couvercle (10), dans lequel le premier élément de liaison (21) présente un premier élément de liaison par complémentarité de formes (22) lequel, pour former une première liaison par complémentarité de formes, peut être relié à une première pièce complémentaire (12) fixée au couvercle (10),
dans lequel une première pièce de poussée élastique (23) est prévue, laquelle s'enclenche dans un premier renfoncement d'arrêt (14) en présence de la première liaison par complémentarité de formes, et/ou
dans lequel le deuxième élément de liaison (31) présente un deuxième élément de liaison par complémentarité de formes (32) lequel, pour former une deuxième liaison par complémentarité de formes, peut être relié à une deuxième pièce complémentaire (9) fixée au corps de base (2),
dans lequel une deuxième pièce de poussée élastique (33) est prévue, laquelle s'enclenche dans un deuxième renfoncement d'arrêt (16) en présence de la deuxième liaison par complémentarité de formes.

2. Récipient (1) selon la revendication 1, dans lequel la première pièce de poussée élastique (23) est montée dans le premier élément de liaison par complémentarité de formes (32) et le premier renfoncement d'arrêt (14) est réalisé dans la première pièce complémentaire (12).

3. Récipient (1) selon l'une quelconque des revendications 1 et 2, dans lequel un axe longitudinal (41) du premier élément de liaison par complémentarité de formes (22) et un axe longitudinal de la première pièce complémentaire (12) s'étendent, pour un certain angle d'ouverture, notamment de 90°, du couvercle (10) parallèlement à la force de gravité, de sorte que la liaison par complémentarité de formes du couvercle (10) avec le premier élément de liaison (21) peut être rompue en soulevant le couvercle (10).

4. Récipient (1) selon l'une quelconque des revendications 1 à 3, dans lequel le deuxième élément de liaison par complémentarité de formes (32) s'insère dans un deuxième logement (15) réalisé dans la deuxième pièce complémentaire (9),
dans lequel le deuxième renfoncement d'arrêt (16) est réalisé dans une paroi intérieure du deuxième logement (15),
dans lequel la deuxième pièce de poussée élastique (33) est montée dans le deuxième élément de liaison par complémentarité de formes (32) et s'étend angulairement, de préférence perpendiculairement, par rapport à un axe longitudinal (42) du deuxième élément de liaison par complémentarité de formes (32).

5. Récipient (1) selon l'une quelconque des revendications 1 à 4, dans lequel, pour libérer la deuxième liaison par complémentarité de formes, une troisième pièce de poussée élastique (34) est prévue, laquelle est précontrainte à l'état enclenché de la deuxième pièce de poussée élastique (33), et est conçue pour pousser le deuxième élément de liaison par complémentarité de formes (32) au moins partiellement hors du logement lorsque la deuxième pièce de poussée (33) est libérée du deuxième renfoncement d'arrêt (16).

6. Récipient (1) selon les revendications 4 et 5, dans lequel la troisième pièce de poussée élastique (34) est montée dans le deuxième élément de liaison par complémentarité de formes (32) et s'applique contre la paroi intérieure du deuxième logement (15) à l'état enclenché de la deuxième pièce de poussée élastique (33).

7. Récipient (1) selon l'une quelconque des revendications précédentes, dans lequel le module de liaison (20) comprend un boîtier (17) destiné à recevoir l'au moins un composant (50) pour influencer un mouvement de pivotement du couvercle (10).

8. Récipient (1) selon l'une quelconque des revendications précédentes, dans lequel au moins un support de palier (9) est prévu sur le corps de base (2) pour la liaison avec le deuxième élément de liaison (31).

9. Récipient (1) selon l'une quelconque des revendications précédentes, dans lequel le corps de base (2) présente une surface de fond (3), une paroi avant (4), une paroi arrière (5) et deux parois latérales (6, 7), dans lequel le module de liaison (20) est de préférence fixé à la paroi arrière (5) du corps de base (2), en particulier à une face supérieure de la paroi arrière (5).

10. Récipient (1) selon l'une quelconque des revendications précédentes, avec deux modules de liaison (20), dans lequel les directions longitudinales (41) des premiers éléments de liaison par complémentarité de formes (22) s'étendent parallèlement les unes aux autres et sont orientées dans la même direction, dans lequel les directions longitudinales (42) des deuxièmes éléments de liaison par complémentarités de forme (32) s'étendent parallèlement les unes aux autres, mais sont orientées en sens inverse.

11. Récipient selon la revendication 9 et la revendication 10, dans lequel la paroi arrière (5) s'étend dans la direction latérale depuis une première partie d'extrémité jusqu'à une deuxième partie d'extrémité, dans lequel les parties d'extrémité sont chacune reliées à une paroi latérale (6, 7), dans lequel les modules de liaison (20) sont fixés dans les parties d'extrémité de la paroi arrière (5).

12. Récipient (1) selon l'une quelconque des revendications précédentes, le composant pour influencer le mouvement de pivotement du couvercle (10) comprenant :
- un frein (50) pour freiner un mouvement de pivotement du couvercle (10) et/ou pour maintenir le couvercle (10) dans une position entre la position de fermeture et la position d'ouverture et/ou
- un élément moteur pour déplacer le couvercle (10) entre la position de fermeture et la position d'ouverture.
